# EUROPÄISCHE PATENTSCHRIFT

(11) **EP 0 845 879 B1**
(45) Veröffentlichungstag und Bekanntmachung des Hinweises auf die Patenterteilung: **01.03.2006**
(21) Anmeldenummer: 97440123.4
(22) Anmeldetag: 02.12.1997
(51) Int. Cl.: H04B 10/08

(54) **Optische Schalteinheit, insbesondere zum Umschalten auf Ersatzkomponenten in optischen Übertragungssystemen**
Optical switching unit, particularly for switching to alternative components in optical transmission systems
Unité de commutation optique, particulièrement pour commuter vers des composants alternatifs dans des systèmes de transmission optique

(30) Priorität: 02.12.1996 DE 19649870
(43) Veröffentlichungstag der Anmeldung: 03.06.1998
(73) Patentinhaber: ALCATEL, 75008 Paris (FR)
(72) Erfinder: Kaiser, Manfred, 71282 Hemmingen (DE); Hehl, Frank, 71711 Murr (DE); Hausser, Rainer, 70734 Fellbach (DE); Anhorn, Jürgen, 70806 Kornwestheim (DE)
(74) Vertreter: Rausch, Gabriele

(56) Entgegenhaltungen:
- EP-A- 0 620 694
- US-A- 5 069 521
- US-A- 5 317 198

## Beschreibung

Die Erfindung betrifft eine optische Schalteinheit, die insbesondere dazu verwendet werden kann, um in optischen Übertragungssystemen von fehlerhaften Übertragungseinrichtungen auf Ersatz-Übertragungseinrichtungen umzuschalten. Eine Übertragungseinrichtung kann in diesem Zusammenhang beispielsweise ein Sendelaser, eine Empfängerphotodiode oder eine optische Faser sein.

In optischen Übertragungssystemen verbinden optische Fasern einen Sender und einen Empfänger. Aufgrund der großen Übertragungsbandbreiten optischer Fasern genügt meist eine einzige derartige Faser, um die üblicherweise anfallenden Datenmengen zu übertragen. Um im Falle einer Beschädigung dieser optischen Faser weiterhin Daten übertragen zu können, verlegt man parallel zu dieser optischen Faser eine oder mehrere Ersatzfasern. Wenn eine Beschädigung der optischen Fasern registriert wird, so veranlaßt eine Steuereinheit, daß der Sender und der Empfänger auf eine Ersatzfaser umschalten.

Um die Zuverlässigkeit von optischen Übertragungssystemen zu erhöhen, werden häufig auch ein Ersatzlaser und/oder eine Ersatzphotodiode in das System integriert, die bei Ausfall der Haupteinrichtung deren Funktion übernehmen. Da während des Umschaltvorgangs auf eine Ersatz-Übertragungseinrichtung die Datenübertragung unterbrochen ist, sollte die Totzeit des Übertragungssystems, d. h. die Zeit, die für den Umschaltvorgang benötigt wird, möglichst kurz sein.

Aus der Europäischen Patentanmeldung EP-A1-519 712 ist ein optisches Bus-Netzwerk bekannt, bei dem die beiden Endknoten des Busses über optische Fasern mit einem zusätzlichen Überwachungsknoten verbunden sind. Der Überwachungsknoten, der somit unmittelbar zwischen den beiden Endknoten angeordnet ist, stellt mit Hilfe eines Schalters eine direkte Verbindung zwischen den beiden Endknoten her, wenn der Bus unterbrochen ist. Dadurch werden die Knoten, die in unmittelbarer Nachbarschaft zu der unterbrochenen Stelle liegen, zu den neuen Endknoten des Busses. Um Unterbrechungen (z. B. aufgrund eines Faserbruchs) feststellen zu können, verfügt der Überwachungsknoten über opto-elektronische Wandler, mit denen er die ihm von den Endknoten übermittelten Signale überwacht.

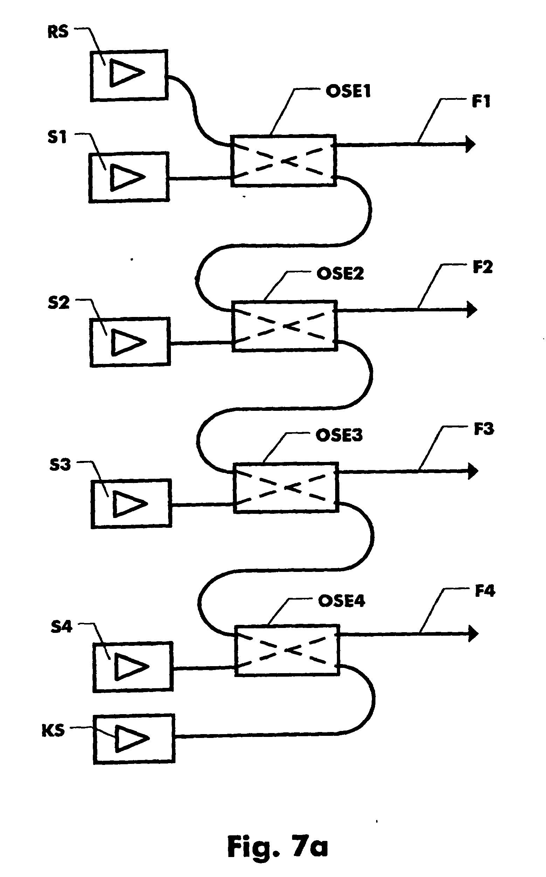

Aus der Offenlegungsschrift DE-A1-44 33 031 ist ein Verfahren zum Umschalten auf eine oder mehrere Ersatzleitungen in uni- oder bidirektionalen optischen Übertragungssystemen bekannt (siehe Fig. 6). Wenn der Empfängerteil einer Sende-/Empfangseinheit SE6A auf der einen Seite eines bidirektionalen optischen Übertragungssystems den über eine optische Faser FA6 übertragenen Datenstrom nicht oder nur stark gestört empfängt, so teilt er dies einer dieser Seite zugeordneten Steuereinheit ST6A mit. Die Steuereinheit veranlaßt, daß auf dieser Seite der Sender und der Empfänger auf eine Ersatzleitung FAE6 umschalten. Der Empfängerteil einer Sende-/Empfangseinheit SE6B auf der anderen Seite der Übertragungsstrecke stellt dann fest, daß nun kein Signal mehr an der ursprünglich benutzten optischen Faser FA6 anliegt. Die Steuereinheit ST6B veranlaßt daraufhin auch auf jener Seite der Übertragungsstrecke ein Umschalten auf die Ersatzleitung FAE6.

Unter bestimmten Umständen, etwa bei sehr langen Übertragungsstrecken, ist die Wahrscheinlichkeit relativ hoch, daß nicht nur die eigentlich für die Übertragung vorgesehene optische Faser, sondern auch die Ersatzfaser beschädigt wird. In diesem Fall bricht die Datenübertragung vollständig zusammen. Um dies zu verhindern, können z. B. mehr als eine Ersatzfaser verlegt werden, wie dies aus der oben zitierten DE-A1-44 33 031 bekannt ist. Gerade bei langen Übertragungsstrecken stellen jedoch die zusätzlich zu verlegenden optischen Fasern einen beträchtlichen Kostenfaktor dar.

Weitere Verfahren zum Umschalten auf optische Ersatzkomponenten sind aus EP-A-0 620 694 und US-A-5 069 521 bekannt.

Es ist daher Aufgabe der Erfindung, eine optische Schalteinheit anzugeben, mit der in optischen Übertragungssystemen von fehlerhaften Übertragungseinrichtungen auf Ersatz-Übertragungseinrichtungen umgeschaltet werden kann. Die optische Schalteinheit soll einfach im Aufbau und universell einsetzbar sein. Die optische Schalteinheit soll insbesondere erlauben, ein optisches Übertragungssystem aufzubauen, welches auch bei häufig auftretenden Schäden an optischen Fasern eine sichere Datenübertragung ermöglicht, aber möglichst wenige optische Ersatzfasern erfordert.

Die Erfindung löst die Aufgabe mit Hilfe der in Ansprüchen 1-5 aufgeführten Merkmale. Einer, mehrere oder alle Anschlüsse auf beiden Seiten eines optischen n x m Raumschalters werden durch Photodioden überwacht, die mit einer in die optische Schalteinheit integrierten Steuereinheit verbunden sind. Die Steuereinheit steuert die Stellung des optischen Raumschatters in Abhängigkeit von den an den Anschlüssen anliegenden Signalen. Je nachdem, wie die Steuereinheit programmiert ist, kann die erfindungsgemäße optische Schalteinheit in unterschiedlichen Funktionen vorteilhaft eingesetzt wer den.

In einem ersten Ausführungsbeispiel wird die optische Schalteinheit als Umschalter in einer optischen Übertragungsstrecke verwendet. Die optische Übertragungsstrecke besteht aus einer ersten optischen Faser, zu der parallel eine zweite optische Faser als Ersatz verlegt ist. In die Übertragungsstrekke werden in bestimmten Abständen erfindungsgemäße optische Schalteinheiten integriert. Wird die ersten optische Faser unterbrochen, so registrieren dies die der Bruchstelle benachbarten optischen Schalteinheiten und schalten selbständig auf die vorhandene Ersatzfaser um. Da die Umschaltvorgänge in der Übertragungsstrecke selbst und nicht zentral auf der Sender- oder Empfängerseite ausgelöst und gesteuert werden, ist die Totzeit des Übertragungssystems, d. h. die Zeit, in der keine Datenübertragung stattfindet, sehr kurz.

Durch die Unterteilung der Übertragungsstrecke in mehrere Abschnitte kann bei Verwendung der erfindungsgemäßen Schalteinheiten außerdem erreicht werden, daß selbst dann, wenn beide optische Fasern von einer oder sogar mehreren Unterbrechungen betroffen sind, eine sichere Datenübertragung gewährleistet bleibt, da erfindungsgemäß immer nur der jeweils fehlerhafte Abschnitt durch die Ersatzfaser überbrückt wird. Vorteilhaft ist außerdem, daß die Stellung der optischen Schalter auch direkt über die optischen Fasern vom Sender gesteuert werden kann, wenn die optische Schalteinheit so programmiert ist, daß sie bestimmte Muster im Datenstrom erkennt und daraufhin entsprechende Umschaltvorgänge auslöst.

In einem zweiten Ausführungsbeispiel wird die optische Schalteinheit in einer Anordnung von Sendelasern dazu verwendet, auf einen Ersatzlaser umzuschalten, wenn einer der Sendelaser ausfällt. Auch hier kann die Übertragungsfähigkeit des Systems innerhalb kürzester Zeit wieder vollständig wiederhergestellt werden.

In einem dritten Ausführungsbeispiel wird die optische Schalteinheit als optischer Wählschalter verwendet. Als selbständige Schalteinheit ist die optische Schalteinheit in der Lage, in paketvermittelten Übertragungssystemen den Adressbereich im Paketkopf zu erkennen und in Abhängigkeit von diesen Informationen Kommunikationsverbindungen entsprechend durchzuschalten. Damit kann die erfindungsgemäße Schalteinheit beispielsweise vorteilhaft in zukünftigen optischen ATM-Vermittlungsstellen eingesetzt werden.

Weitere vorteilhafte Ausgestaltungen der Erfindung sind den Unteransprüchen entnehmbar.

Die Erfindung wird nachfolgend anhand der Ausführungsbeipiele und der Zeichnungen eingehend erläutert. Es zeigen:
Fig. 1: Eine erfindungsgemäße optische Schalteinheit noch Anspruch 1 in schematischer Darstellung,
Fig. 2: Eine erfindungsgemäße optische Schalteinheit noch Anspruch 3,
Fig. 3: Eine besonders vorteilhaft ausgestaltete optische Schalteinheit nach Anspruch 2,
Fig. 4a: Schaltung zum Umschalten auf eine Ersatzfaser in einem bidirektionalen optischen Übertragungssystem, optische Faser ungestört,
Fig. 4b: Schaltung zum Umschalten auf eine Ersatzfaser in einem bidirektionalen optischen Übertragungssystem, optische Faser unterbrochen,
Fig. 5: Schaltung zum Umschalten auf eine Ersatzfaser in einem unidirektionalen optischen Übertragungssystem, optische Faser unterbrochen,
Fig. 6: Eine Anordnung zum Umschalten auf eine Ersatzfaser in einem optischen Übertragungssystem nach dem Stand der Technik,
Fig. 7a: Schaltung zum Umschalten auf einen Ersatzsender in einem optischen Übertragungssystem, alle Sender ungestört,
Fig. 7b: Schaltung zum Umschalten auf einen Ersatzsender in einem optischen Übertragungssystem, ein Sender gestört,
Fig. 8a: Beispiel für eine Verwendung der erfindungsgemäßen optischen Schalteinheit als optischer Wählschalter in einer Expandiereinheit eines optischen Koppelnetzes
Fig. 8b: Beispiel für eine Verwendung der erfindungsgemäßen optischen Schalteinheit als optischer Wählschalter in einer Verteiteinheit eines optischen Koppelnetzes.

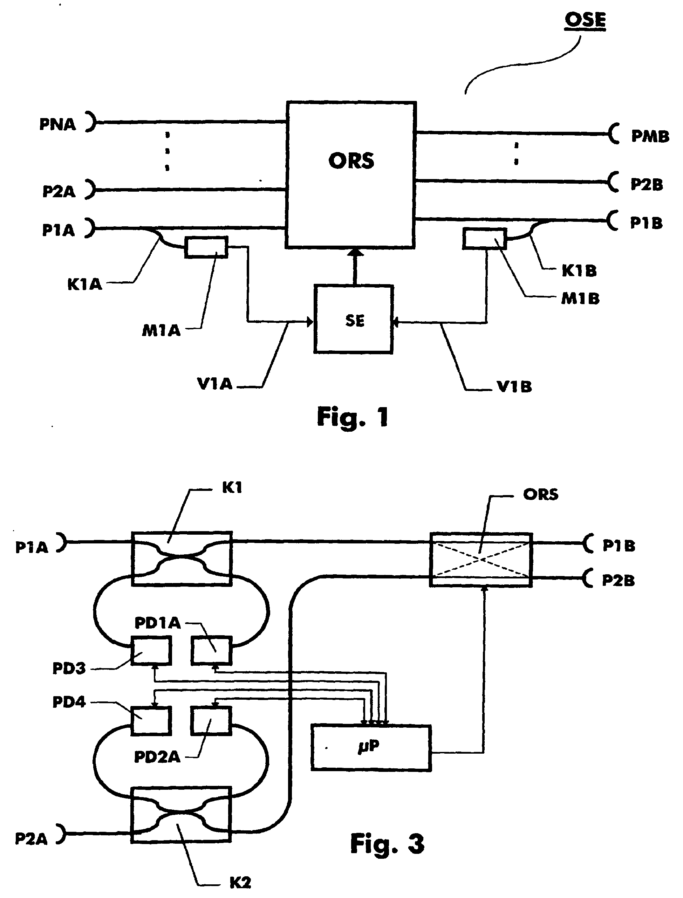

In Fig. 1 ist eine erfindungsgemäße optische Schalteinheit dargestellt. Die Schalteinheit besteht aus einem optischen Raumschalter ORS, der linksseitig n Anschlüsse P1A...PNA und rechtsseitig m Anschlüsse P1B...PMB hat. An einem Anschluß können, je nachdem, ob uni- oder bidirektionale Übertragung stattfindet, Licht in den optischen Raumschalter ORS ein- oder austreten oder sowohl ein- als auch austreten. Der optische Raumschalter erlaubt es, jeden der linksseitigen Anschlüsse P1A...PNA mit jedem der rechtsseitigen Anschlüsse P1B...PMB zu verbinden. In den meisten Anwendungsfällen wird n = m gewöhlt werden , d. h. der Raumschalter hat auf jeder Seite gleich viele Anschlüsse. Es sind aber auch Anwendungen denkbar, bei denen n nicht gleich m ist. Auf diese Variante wird in einem weiter unten näher erläuterten Ausführungsbeispiel eingegangen.

In Fig. 1 wird der Anschluß P1A auf der linken Seite des Raumschalters ORS durch eine Überwachungseinheit M1A überwacht. Auf der rechten Seite des Raumschalters ORS überwacht die Überwachungseinheit M1B den Anschluß P1B. Bei den Überwachungseinheiten handelt es sich vorzugsweise um Photodioden, es sind jedoch grundsätzlich auch andere Bauelemente einsetzbar, z. B. Photoelektronenvervielfacher. Die Anschlüsse überwachen heißt in diesem Zusammenhang, daß die Überwachungseinheiten M1A und M1B zumindest erkennen, ob am entsprechenden Anschluß Licht in den optischen Raumschalter ORS eintritt oder nicht. In einem weiteren Sinne kann überwachen auch bedeuten, daß die Überwachungseinheiten M1A und M1B in der Lage sind, Signale, sofern sie am entsprechenden Anschluß anliegen, auf den in ihnen enthaltenen Informationsgehalt hin zu überprüfen. In diesem Fall umfassen diese Überwachungseinheiten, je nach Übertragungsverfahren, z. B. auch Demultiplex- und/oder Dekodiereinrichtungen.

Die aus der Überwachung gewonnene Information wird von den Überwachungseinheiten M1A und M1B über Verbindungen V1A und V1B einer Steuereinheit SE übermittelt. Die Steuereinheit steuert dann in Abhängigkeit von diesen Informationen über die optischen Signale an den Anschlüssen die Stellung des optischen Raumschalters ORS. Die Steuereinheit umfaßt vorzugsweise einen Mikroprozessor und eine Speichereinheit. Der Zusammenhang zwischen der Schalterstellung und den an den überwachten Anschlüssen anliegenden Signalen ist durch eine Programmierung oder durch feste Verdrahtung festgelegt und hängt ab vom Einsatz der optischen Schalteinheit.

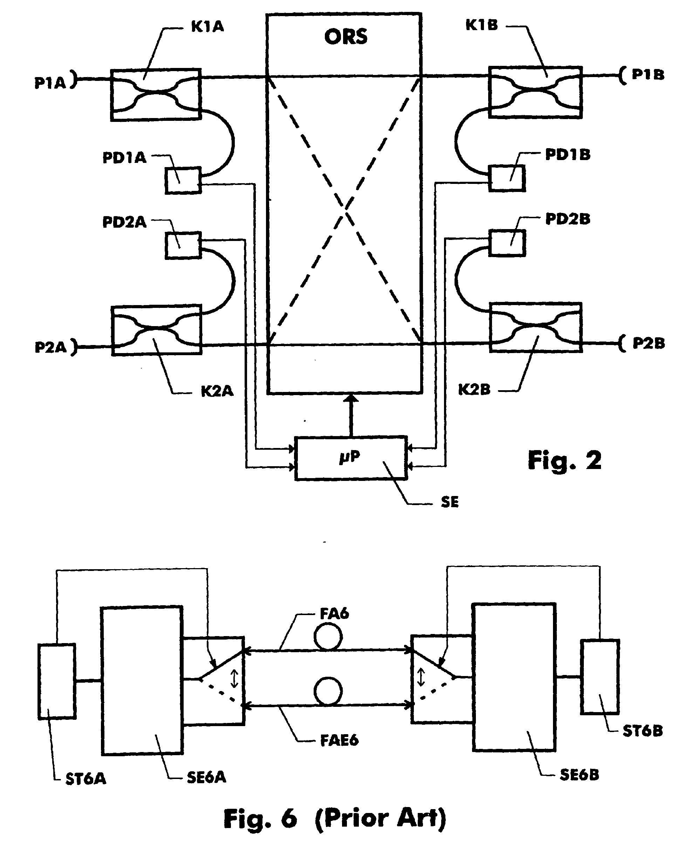

In Fig. 2 ist eine spezielle Ausführungsform der erfindungsgemäßen optischen Schalteinheit dargestellt. Bei dem optischen Raumschalter ORS handelt es sich hier um einen 2 x 2 Raumschalter, wie sie als integriert optische Komponenten derzeit erhältlich sind. Der Raumschalter ORS ist mit Lichtwellenleitern verbunden, die etwa als optische Fasern oder als integrierte optische Wellenleiter ausgeführt sein können. Die Anschlüsse des optischen Raumschalters ORS sind mit P1A, P2A und P1B, P2B bezeichnet. Vor dem Anschluß P1A ist in diesem Ausführungsbeispiel ein optischer Richtkoppler K1A angeordnet. Der Richtkoppler K1A, der beispielsweise als Faserverschmelzkoppler ausgeführt sein kann, zweigt von dem am Anschluß P1A anliegenden optischen Signal einen Teil ab und führt diesen Teil der Photodiode PD1A zu. Die Photodiode ist mit der Steuereinheit SE verbunden. In analoger Weise sind auch die anderen drei Anschlüsse durch Photodioden PD2A, PD1B, PD2B überwacht. Die Steuereinheit umfaßt einen Mikroprozessor und steuert die Stellung des optischen Roumschalters.

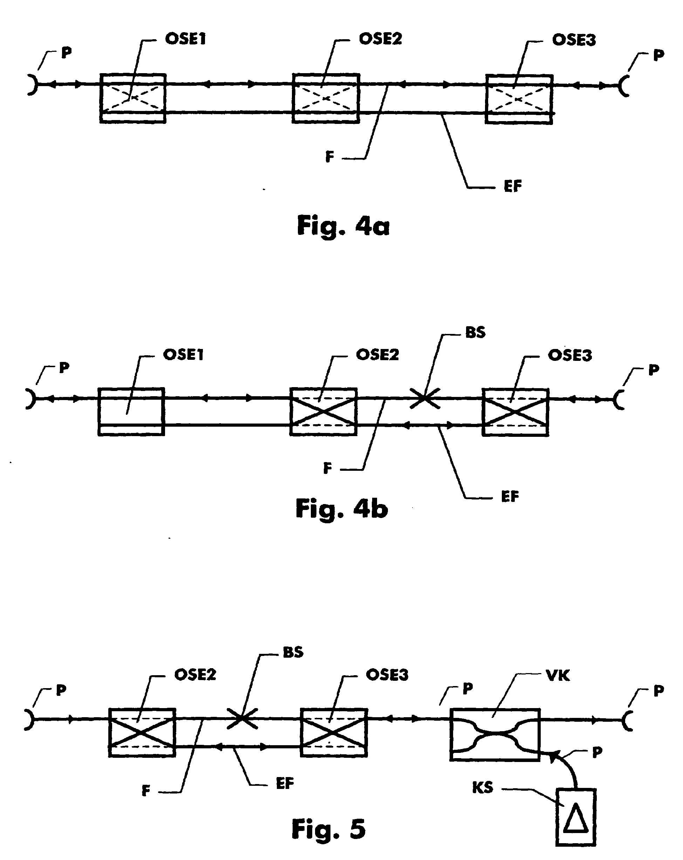

Fig. 3 zeigt ein besonders vorteilhaftes Ausführungsbeispiel. In Abwandlung zu dem in Fig. 2 dargestellten Ausführungsbeispiel sind hier nur 2 Richtkoppler K1 und K2 erforderlich, um Licht von allen vier Anschlüssen P1A, P2A, P1B, P2B abzuzweigen. Wie im obigen Ausführungsbeispiel wird der Anschluß P1A durch die Photodiode PD1A überwacht. Der Anschluß P1B auf der anderen Seite des optischen Raumschalters ORS wird hingegen, je nach Stellung des optischen Raumschalters ORS, durch die Photodiode PD3 oder PD4 überwacht. Wenn der optische Raumschalter ORS, wie in Fig. 3 an der durchgezogenen Linie erkennbar, auf Durchschaltung steht, so gelangt das am Anschluß P1B anliegende Signal durch den optischen Raumschalter hindurch über den Richtkoppler K1 zur Photodiode PD3. Steht der optische Raumschalter ORS in Kreuz-Stellung (gestrichelte Linie), so gelangt das am Anschluß P1B anliegende Signal durch den optischen Raumschalter hindurch über den Richtkoppler K2 zur Photodiode PD4. Da die Steuereinheit SE die Stellung des optischen Raumschalters ORS kennt, kann sie die von den vier Photodioden PD1A, PD2A, PD3, PD4 gelieferten Informationen den einzelnen Anschlüssen eindeutig zuordnen. Do bei diesem Ausführungsbeispiel nur zwei Richtkoppler benötigt werden, läßt sich die optische Schalteinheit sehr kompakt aufbauen.

Handelt es bei dem optischen Raumschalter ORS um einen n x m Raumschalter mit n ≠ m, so sind die Richtkoppler auf der Seite des optischen Raumschalters anzuordnen, auf der mehr Anschlüsse sind. Bei einem 4 x 8 Raumschalter können so beispielsweise vier Richtkoppler eingespart werden.

Bei dem in Fig. 4a und Fig. 4b dargestellten Ausführungsbeispiel wird die erfindungsgemäße optische Schalteinheit dazu verwendet, in einem bidirektionalen optischen Übertragungssystem von einer optischen Faser F auf eine Ersatzfaser EF umzuschalten. In Fig. 4a ist der Übertragungsweg zwischen den Kommunikationsendpunkten PA und PB durch drei erfindungsgemäße optische Schalteinheiten OSE1, OSE2 und OSE3 in 4 Abschnitte unterteilt. Die optischen Schalteinheiten sind auf Durchschalten gesetzt und verbinden so den Kommunikationsendpunkt PA mit dem Kommunikationsendpunkt PB über die optische Faser F.

Wird etwa, wie in Fig. 4b skizziert, zwischen den optischen Schalteinheiten OSE2 und OSE3 die Übertragung unterbrochen, etwa durch Faserbruch oder zu starke Biegung der Faser, so registrieren die der Bruchstelle BS benachbarten optischen Schalteinheiten OSE2 und OSE3 ein Ausbleiben von Eingangssignalen an der jeweils der Bruchstelle BS zugewandten Seite. Die optischen Schalteinheiten reagieren auf dieses Ausbleiben unverzüglich mit einem Umschalten auf die Ersatzfaser EF. Somit wird nur im schadhaften Abschnitt des Übertragungsweges auf die Ersatzfaser umgeschaltet. Falls die Ersatzfaser EF im Abschnitt zwischen den optischen Schalteinheiten OSE1 und OSE2 beschädigt sein sollte, so ist bei dieser erfindungsgemäßen Unterteilung der Übertragungsstrecke dennoch eine ungestörte Datenübertragung möglich.

Der gegenüber bekannten Lösungen entscheidende Vorteil dieser Lösung liegt dorin, daß die Umschaltvorgänge dezentral, d. h. von den Schalteinheiten selbst und nicht von einer den Endpunkten der Übertragungsstrecke zugeordneten Schaltzentrale veranlaßt werden. Dadurch sind sehr geringe Totzeiten möglich; außerdem kann die Übertragungsstrecke modular aufgebaut und ergänzt werden, ohne Änderungen an den Kommunikationsendpunkten vornehmen zu müssen.

Bei dem in Fig. 5 dargestellten Ausführungsbeispiel handelt es sich um eine Adaption des in Fig. 4 für bidirektionale Übertragung dargestellten Prinzips auf eine unidirektionale Übertragung. Die unidirektionale Übertragung erfolgt hier vom Kommunikationsendpunkt PA zum Kommunikationsendpunkt PB. Wenn im Abschnitt zwischen den optischen Schalteinheiten OSE2 und OSE3 eine Bruchstelle BS auftritt, so registriert die optische Schalteinheit OSE3 am entsprechenden Anschluß kein Signal und schaltet daraufhin um auf die Ersatzfaser EF. Damit auch die optische Schalteinheit OSE2, die in Fig. 5 links von der Bruchstelle liegt, die Unterbrechung der optischen Faser F registrieren kann, wird von der Empfängerseite PB her ein von einem Kontrollsender KS erzeugtes optisches Kontrollsignal in die optische Faser F eingekoppelt. Der Kontrollsender kann beispielsweise ein Halbleiterlaser sein; die Ankopplung an die optische Faser F erfolgt vorzugsweise über einen Verschmelzkoppler VK.

Dieses in Richtung des Pfeils P eingekoppelte Signal durchläuft die optische Faser F, und zwar entgegengesetzt zur eigentlichen Übertragungsrichtung. Da nach Auftreten der Unterbrechung die optische Schalteinheit OSE3 bereits umgeschaltet hat (siehe durchgezogene Linien in OSE3), wird das Kontrollsignal auf die Ersatzfaser EF geführt und gelangt so auf den entsprechenden Anschluß der optischen Schalteinheit OSE2. Ohne Unterbrechung der optischen Faser F wäre das Kontrollsignal auf den benachbarten, d. h. in Fig. 5 auf den oberen, Anschluß geleitet worden. Da also bei einer Unterbrechung in der optischen Faser F das Kontrollsignal in der optischen Schalteinheit OSE2 automatisch dem anderen Anschluß zugeführt wird, registriert diese optische Schalteinheit OSE2 sofort die Unterbrechung und schaltet unverzüglich auf die Ersatzfaser EF durch, so daß das zu übertragende Signal nun über die Ersatzfaser EF geführt wird.

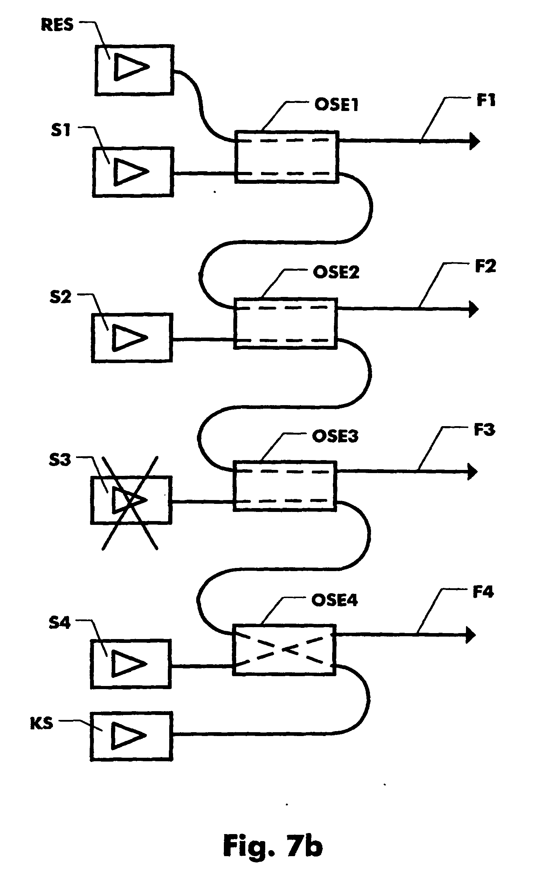

Ein weiteres Ausführungsbeispiel der vorliegenden Erfindung ist in den Fig. 7a und 7b dargestellt. In diesem Ausführungsbeispiel wird die erfindungsgemäße optische Schalteinheit in einer Ersatzschaltung für optische Sender verwendet. Vier optische Sender S1...S4 sind über optische Schalteinheiten OSE1...OSE4 so verbunden, daß im ungestörten Zustand jeder der vier Sender mit einer der vier optischen Fasern F1...F4 verbunden ist. Die Schaltzustände der optischen Schalteinheiten sind in Fig. 7a durch gestrichelte Linien angedeutet. Ein Kontrollsender KS ist in diesem Normal-Schaltzustand mit einer Reserve-Sendeeinheit RES verbunden. Die Reserve-Sendeeinheit umfaßt einen optischen Sender, der vorzugsweise genauso ausgeführt ist wie die vier Sender S1...S4. Außerdem ist in der Reserve-Sendeeinheit eine Photodiode integriert, die das Anliegen eines Signals überwacht. Wenn keiner der vier Sender S1...S4 gestört ist, so registriert diese Photodiode das vom Kontrollsender KS emittierte Kontroll-Signal. Solange dieses Signal registriert wird, bleibt der optische Sender in der Reserve-Sendeeinheit RES im Wartezustand ("stand-by mode"), d. h. er emittiert kein Licht.

Fällt beispielsweise, wie in Fig. 7b dargestellt, der Sender S3 aus, so registriert die optische Schalteinheit OSE3 am entsprechenden Anschluß das Fehlen eines Signals. Die optische Schalteinheit ändert daraufhin ihren Schaltzustand. Der Kontrollsender KS ist nun nicht mehr mit der Reserve-Sendeeinheit RES, sondern mit dem ausgefallenen Sender S3 verbunden. Die beiden optische Schalteinheiten OSE2 und OSE1 registrieren daraufhin das Fehlen des vom Kontrollsender KS emittierten Signals und schalten ebenfalls um. Da die Reserve-Sendeeinheit RES kein Kontrollsignal mehr empfängt, geht sie vom Warte-Zustand in den aktiven Zustand über und emittiert Licht. Damit ist der in Fig. 7b skizzierte Endzustand erreicht. Die Reserve-Sendeeinheit RES sowie die Sender S1, S2 und S4 sind nun mit den optischen Fasern F1...F4 verbunden. Die Verbindung bleibt so nach dem Ausfall des Senders S3 praktisch unverändert erhalten.

Je nachdem, ob alle vier optische Fasern mit den gleichen oder mit unterschiedlichen Signalen gespeist werden, muß eine geeignet ausgelegte Elektronik dafür sorgen, daß die Modulationsströme, mit denen die optischen Sender S1...S4 versorgt werden, bei Umschalten auf die Reserve-Sendeeinheit RES entsprechend umgeleitet werden. Außerdem kann es vorteilhaft sein, für das vom Kontrollsender KS emittierte Signal eine eigene Wellenlänge zu wählen; die von der Übertragungswellenlänge verschieden ist. Damit wird wirkungsvoll verhindert, daß Licht, welches nicht vom Kontrollsender KS stammt, durch Übersprechen in den optischen Schalteinheiten in die Reserve-Sendeeinheit RES gelangt.

Auch hier liegt der wesentliche Vorteil bei Einsatz der erfindungsgemäßen optischen Schalteinheit darin, daß ein Umschalten der Raumschalter ohne Einbindung einer zentralen Steuereinheit und daher unverzüglich erfolgt.

In einem weiteren Ausführungsbeispiel wird die optische Schalteinheit als optischer Wählschalter eingesetzt. Derartige optische Wählschalter werden für eine rein optische Vermittlung in optischen Übertragungssystemen benötigt. In einer optischen Vermittlungsstelle sollen, wie auch bei elektronischen Vermittlungsstellen, Koppelnetze für das Konzentrieren, Verteilen und Expandieren von Übertragungsleitungen eingesetzt werden. Bei optischen poketvermittelten Übertragungssystemen sind in den Paketköpfen Datenbereiche für die Adresse vorgesehen. Diese Adresse muß vom Koppelnetz erkannt werden, damit die Verbindung hergestellt werden kann.

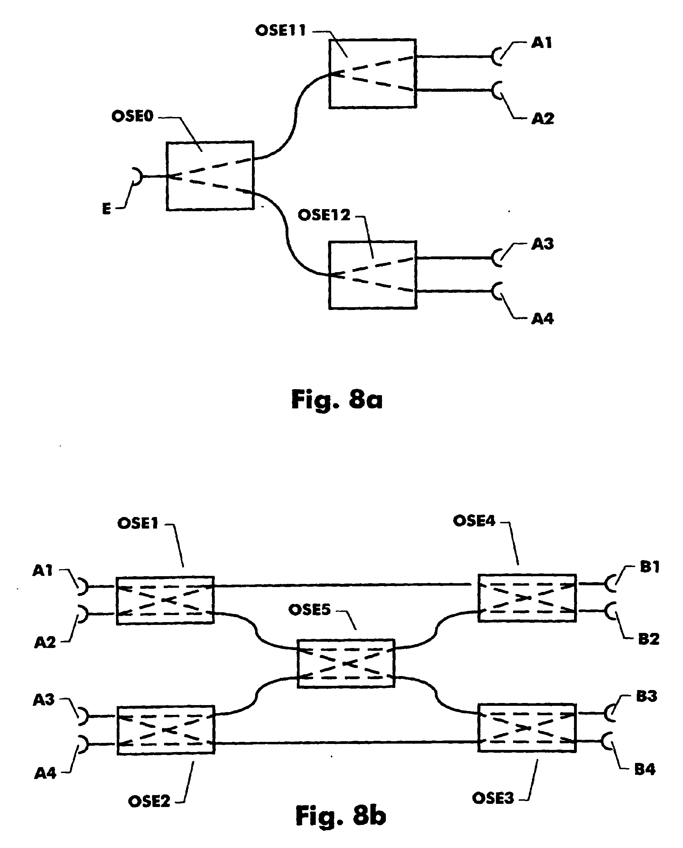

Fig. 8a zeigt ein einfaches Beispiel für eine Expandiereinheit in einem optischen Koppelnetz. Durch drei erfindungsgemäße optische Schalteinheiten OSE0, OSE11 und OSE12 wird der Anschluß E auf die vier Ausgänge A1...A4 verteilt. Am Anschluß der optischen Schalteinheit OSE0 werden die Datenpakete von einer Photodiode überwacht. Die in die erfindungsgemäße optische Schalteinheit integrierte Steuereinheit erkennt den Adressbereich im Datenpaket und stellt je nach Programmierung der Schalteinheit auf einen der beiden Ausgänge der optischen Schalteinheit um. Die beiden optischen Schalteinheiten OSE11 und SOE12 in der zweiten Koppelnetzebene verfahren entsprechend. Die in derartigen Koppelnetzen üblichen optischen Raumschalter werden hier also nicht von einer mit allen Raumschaltern verbundenen zentralen Steuereinheit gesteuert, sondern steuern sich gleichsam selbst. Dadurch wird ein modularer Aufbau derartiger Koppelnetze wesentlich einfacher und kostengünstiger. Es sei darauf hingewiesen, daß bei diesem Ausführungsbeispiel die Zahl der Anschlüsse zu beiden Seiten des optischen Raumschalters nicht gleich ist.

Fig. 8b zeigt eine Verteileinheit in einem Koppelnetz. Zwischen jedem der 4 linksseitigen Anschlüsse A1...A4 und jedem der vier rechtsseitigen Anschlüsse B1...B4 ist mit Hilfe der fünf optischen Schalteinheiten OSE1...OSE5 eine Verbindung herstellbar. In jeder optischen Schalteinheit ist jeweils ein 2 x 2 optischer Raumschalter integriert, dessen vier Anschlüsse von jeweils einer Photodiode überwacht werden. Dadurch ist es möglich, von beiden Seiten der Verteileinheit ankommende Verbindungsaufbau-Anforderungen zu bearbeiten.

Aus Gründen der Übersicht sind hier nur einige einfache Bespiele für die Einsatzmöglichkeiten der erfindungsgemäßen optischen Schalteinheit erläutert. Aus diesen Beispielen wird aber bereits deutlich, wie vielfältig die erfindungsgemäße optische Schalteinheit in der optischen Übertragungs- und Vermittlungstechnik eingesetzt werden kann.

## Patentansprüche

1. Optisches Übertragungssystem mit einer Übertragungseinrichtung, wenigstens einer Ersatz-Übertragungseinrichtung und wenigstens zwei optischen Schalteinheiten, die jeweils einen optischen n x m Raumschalter (ORS) mit n + m Anschlüssen (P1A...PNA; P1B...PMB), n = 1, 2, 3, 4,... und m = 2, 3, 4,..., umfassen, dem Mittel (K1A, K1B, M1A, M1B, SE) zugeordnet sind, die die an wenigstens einem Anschluss (P1A, P1B) auf jeder Seite des optischen Raumschalters (ORS) anliegenden optischen Signale überwachen, und die die Stellung des n x m Raumschalters (ORS) in Abhängigkeit von den überwachten optischen Signalen steuern, **dadurch gekennzeichnet, dass**, wenn die Übertragungseinrichtung nicht störungsfrei arbeitet, dies die wenigstens zwei optischen Schalteinheiten erkennen und selbständig auf eine der Ersatz-Übertragungseinrichtungen umschalten.

2. Bidirektionales optisches Übertragungssystem mit:
a) einer ersten Sende-Empfangseinheit,
b) einer zweiten Sende-Empfangseinheit,
c) einem ersten Lichtwellenleiter (F in Fig. 4a und 4b), der die erste Sende-Empfangseinheit mit der zweiten Sende-Empfangseinheit verbindet,
d) wenigstens k weiteren Lichtwellenleitern (EF), k = 1, 2, 3, ..., die parallel zum ersten Lichtwellenleiter (F) angeordnet sind,
e) wenigstens zwei optischen Schalteinheiten (OSE1, OSE2, OSE3), die jeweils einen optischen n x m Raumschalter (ORS) mit n + m Anschlüssen (P1A...PNA; P1B...PMB), n = 1, 2, 3, 4,... und m = 2, 3, 4,..., umfassen, dem Mittel (K1A, K1B, M1A, M1B, SE) zugeordnet sind, die die an wenigstens einem Anschluss (P1A, P1B) auf jeder Seite des optischen Raumschalters (ORS) anliegenden optischen Signale überwachen, und die die Stellung des n x m Raumschalters (ORS) in Abhängigkeit von den überwachten optischen Signalen steuern, **dadurch gekennzeichnet, dass**
- die wenigstens zwei optischen Schalteinheiten (OSE1, OSE2, OSE3) in die Lichtwellenleiter (F, EF) integriert sind,
- und die wenigstens zwei optischen Schalteinheiten (OSE1, OSE2, OSE3) dann, wenn einer der insgesamt k+1 Lichtwellenleiter (F, EF) in wenigstens einem der zwischen zwei optischen Schalteinheiten liegenden Abschnitte beschädigt ist, selbständig auf einen anderen Lichtwellenleiter in diesem Abschnitt umschalten.

3. Unidirektionales optisches Übertragungssystem mit:
a) einem ersten Sender,
b) einem Empfänger,
c) einem ersten Lichtwellenleiter (F in Fig. 5), der den ersten Sender mit dem Empfänger verbindet und in dem sich die zu übertragenden Signale in einer ersten Ausbreitungsrichtung ausbreiten,
d) wenigstens k weiteren Lichtwellenleitern (EF), k = 1, 2, 3, ..., die parallel zum ersten Lichtwellenleiter (F) angeordnet sind,
e) einem zweiten Sender (KS), **gekennzeichnet durch**
f) einen Koppler (VK), der das vom zweiten Sender (KS) erzeugte Licht so in den ersten Lichtwellenleiter einkoppelt, dass es sich entgegen der ersten Ausbreitungsrichtung ausbreitet,
g) wenigstens zwei optische Schalteinheiten (OSE2, OSE3 in Fig. 5), die jeweils einen optischen n x m Raumschalter (ORS) mit n + m Anschlüssen (P1A...PNA; P1B...PMB), n = 1, 2, 3, 4,... und m = 2, 3, 4,..., umfassen, dem Mittel (K1A, K1B, M1A, M1B, SE) zugeordnet sind, die die an wenigstens einem Anschluss (P1A, P1B) auf jeder Seite des optischen Raumschalters (ORS) anliegenden optischen Signale überwachen, und die die Stellung des n x m Raumschalters (ORS) in Abhängigkeit von den überwachten optischen Signalen steuern, wobei
- die wenigstens zwei optischen Schalteinheiten (OSE1, OSE2, OSE3) in die Lichtwellenleiter integriert sind,
- die wenigstens zwei optischen Schalteinheiten (OSE1, OSE2, OSE3) dann, wenn einer der insgesamt k+1 Lichtwellenleiter (F, EF) in wenigstens einem zwischen zwei optischen Schalteinheiten liegenden Abschnitt beschädigt ist, selbständig auf einen anderen Lichtwellenleiter in diesem Abschnitt umschalten.

4. Optische Sendeeinheit mit:
a) einem ersten Sender,
b) einer optischen Schalteinheit mit 2 x 2 Anschlüssen, die einen optischen n x m Raumschalter (ORS) mit n + m Anschlüssen (P1A...PNA; P1B...PMB), n = 1, 2, 3, 4,... und m = 2, 3, 4,..., umfassen, dem Mittel (K1A, K1B, M1A, M1B, SE) zugeordnet sind, die die an wenigstens einem Anschluss (P1A, P1B) auf jeder Seite des optischen Raumschalters (ORS) anliegenden optischen Signale überwachen, und die die Stellung des n x m Raumschalters (ORS) in Abhängigkeit von den überwachten optischen Signalen steuern, und die, wenn der erste Sender störungsfrei arbeitet, diesen mit einem Lichtwellenleiter optisch verbindet, **gekennzeichnet durch**
c) eine Reserve-Sendeeinheit, umfassend einen Reservesender und einen Empfänger, und
d) einen zweiten Sender, der so an die optische Schalteinheit angeschlossen ist, dass, wenn der erste Sender störungsfrei arbeitet, der zweite Sender mit dem Empfänger der Reserve-Sendeeinheit optisch verbunden ist, und dass, wenn der erste Sender nicht störungsfrei arbeitet, dies die optische Schalteinheit registriert und den optischen Raumschalter selbständig umschaltet, so dass der zweite Sender nicht mit der Reserve-Sendeeinheit, sondern der Reservesender der Reserve-Sendeeinheit nun mit dem Lichtwellenleiter optisch verbunden ist.

5. Optische Sendeeinheit mit:
a) n Sendern (S1 ...54), n = 2, 3, 4, ...,
b) n Lichtwellenleitern (F1...F4),
c) n optischen Schalteinheiten (OSE1 ...OSE4) mit 2 x 2 Anschlüssen, die jeweils einen optischen n x m Raumschalter (ORS) mit n + m Anschlüssen (P1A...PNA; P1B...PMB), n = 1, 2, 3, 4,... und m = 2, 3, 4,..., umfassen, dem Mittel (K1A, K1B, M1A, M1B, SE) zugeordnet sind, die die an wenigstens einem Anschluss (P1A, P1B) auf jeder Seite des optischen Raumschalters (ORS) anliegenden optischen Signale überwachen, und die die Stellung des n x m Raumschalters (ORS) in Abhängigkeit von den überwachten optischen Signalen steuern, und
- von denen jede, wenn alle n Sender (S1 ...S4) störungsfrei arbeiten, jeweils einen der n Sender (S1 ...S4) mit jeweils einem der n Lichtwellenleiter (F1...F4) optisch verbindet,
- und die untereinander über jeweils einen Lichtwellenleiter verbunden sind, **gekennzeichnet durch**
d) eine Reserve-Sendeeinheit (RES), umfassend einen Reservesender und einen Empfänger, und
e) einen zusätzlichen Sender (KS in Fig. 7a/7b), der so an eine der n optischen Schalteinheiten (OSE1...OSE4) angeschlossen ist, dass
- wenn alle n Sender (S1 ...S4) störungsfrei arbeiten, der zusätzliche Sender (KS) über alle optischen Schalteinheiten (OSE1 ...OSE4) hinweg mit dem Empfänger der Reserve-Sendeeinheit (RES) optisch verbunden ist,
- und wenn einer (S3) der n Sender (Si ...S4) nicht störungsfrei arbeitet, dies die mit diesem optischen Sender verbundene optische Schalteinheit (OSE3) registriert und den optischen Raumschalter selbständig umschaltet, so dass der zusätzliche Sender (KS) nicht mit der Reserve-Sendeeinheit (RES), sondern der Reservesender der Reserve-Sendeeinheit (RES) nun mit dem Lichtwellenleiter optisch verbunden ist, der im ungestörten Zustand mit dem nun nicht störungsfrei arbeitenden Sender verbunden war.

6. Optisches Übertragungssystem oder optische Sendeeinheit nach einem der vorhergehenden Ansprüche, wobei die Mittel alle Signale, die in die Anschlüsse (P1A, P2A in Figur 3) auf einer Seite des optischen Raumschalters (ORS) eintreten, und alle Signale, die aus diesen Anschlüssen austreten, überwachen.

7. Optisches übertragungssystem oder optische Sendeeinheit nach einem der vorhergehenden Ansprüche, wobei die Mittel Photodioden (PD1A, PD2A, PD1B, PD2B in Figur 2), Richtkoppler (K1A, K2A, K1B, K2B) und eine Steuereinheit (SE) umfassen.

8. Optisches Koppelnetz mit mehreren Wählschaltern, **dadurch gekennzeichnet, dass** das Koppelnetz ein Übertragungssystem nach einem der Ansprüche 1 bis 3 aufweist, und dass die Wählschalter durch die optischen Schalteinheiten des Übertragungssystems realisiert sind.

## Claims

1. Optical transmission system with a transmission facility, at least one standby transmission facility and at least two optical switching units, each containing an optical n x m space switch (ORS) with n + m ports (P1A...PNA; P1B...PMB), n = 1, 2, 3, 4, ... and m = 2, 3, 4,..., this space switch being assigned means (K1A, K1B, M1A, M1B, SE), which monitor the optical signals present at at least one port (P1A, P1B) on each side of the optical space switch (ORS), and which control the setting of the n x m space switch (ORS) dependent on the monitored optical signals, **characterized in that**, when the transmission facility is not working without interference, the at least two optical switching units recognize this and independently switch over to one of the standby transmission facilities.

2. Bidirectional optical transmission system with:
a) a first transceiver,
b) a second transceiver,
c) a first optical waveguide (F in Fig. 4a and 4b), which connects the first transceiver to the second transceiver,
d) at least k further optical waveguides (EF), k = 1, 2, 3, ..., which are arranged parallel to the first optical waveguide (F),
e) at least two optical switching units (OSE1, OSE2, OSE3), each containing an optical n x m space switch (ORS) with n + m ports (P1A...PNA; P1B...PMB), n = 1, 2, 3, 4, ... and m = 2, 3, 4,..., this space switch being assigned means (K1A, K1B, M1A, M1B, SE), which monitor the optical signals present at at least one port (P1A, P1B) on each side of the optical space switch (ORS), and which control the setting of the n x m space switch (ORS) dependent on the monitored optical signals, **characterized in that**
- the at least two optical switching units (OSE1, OSE2, OSE3) are integrated in the optical waveguides (F, EF),
- and, if one of the altogether k+1 optical waveguides (F, EF) in at least one of the sections between two optical switching units is damaged, the at least two optical switching units (OSE1, OSE2, OSE3) independently switch over to a different optical waveguide in this section.

3. Unidirectional optical transmission system with:
a) a first transmitter,
b) a receiver,
c) a first optical waveguide (F in Fig. 5), which connects the first transmitter to the receiver and in which the signals to be transmitted propagate in a first propagation direction,
d) at least k further optical waveguides (EF), k = 1, 2, 3, ..., which are arranged parallel to the first optical waveguide (F),
e) a second transmitter (KS), **characterized by**
f) a coupler (VK), which inserts the light generated by the second transmitter (KS) into the first optical waveguide in such a way that it propagates against the first propagation direction,
g) at least two optical switching units (OSE2, OSE3 in Fig. 5), each containing an optical n x m space switch (ORS) with n + m ports (P1A...PNA; P1B...PMB), n = 1, 2, 3, 4, ... and m = 2, 3, 4,..., this space switch being assigned means (K1A, K1B, M1A, M1B, SE), which monitor the optical signals present at at least one port (P1A, P1B) on each side of the optical space switch (ORS), and which control the setting of the n x m space switch (ORS) dependent on the monitored optical signals, where
- the at least two optical switching units (OSE1, OSE2, OSE3) are integrated in the optical waveguides,
- the at least two optical switching units (OSE1, OSE2, OSE3), in the event that one of the altogether k+1 optical waveguides (F, EF) in at least one section between two optical switching units is damaged, independently switch over to a different optical waveguide in this section.

4. Optical send unit with:
a) a first transmitter,
b) an optical switching unit with 2 x 2 ports, which contain an optical n x m space switch (ORS) with n + m ports (P1A...PNA; P1B...PMB), n = 1, 2, 3, 4, ... and m = 2, 3, 4,..., this space switch being assigned means (K1A, K1B, M1A, M1B, SE), which monitor the optical signals present at at least one port (P1A, P1B) on each side of the optical space switch (ORS), and which control the setting of the n x m space switch (ORS) dependent on the monitored optical signals, and which, if the first transmitter works without interference, optically connects this to an optical waveguide, **characterized by**
c) a reserve send unit, comprising a reserve transmitter and a receiver, and
d) a second transmitter, which is connected to the optical switching unit in such a way that, if the first transmitter is working without interference, the second transmitter is optically connected to the receiver of the reserve send unit, and that, if the first transmitter is not working without interference, the optical switching unit registers this and independently switches over the optical space switch, so that the second transmitter is not optically connected to the reserve send unit, but instead the reserve transmitter of the reserve send unit is now optically connected to the optical waveguide.

5. Optical send unit with:
a) n transmitters (S1 ...S4), n = 2, 3, 4,...,
b) n optical waveguides (F1...F4),
c) n optical switching units (OSE1 ...OSE4) with 2 x 2 ports, each containing an optical n x m space switch (ORS) with n + m ports (P1A...PNA; P1B...PMB), n = 1, 2, 3, 4, ... and m = 2, 3, 4,..., this space switch being assigned means (K1A, K1B, M1A, M1B, SE), which monitor the optical signals present at at least one port (P1A, P1B) on each side of the optical space switch (ORS), and which control the setting of the n x m space switch (ORS) dependent on the monitored optical signals, and
- of which each, if all n transmitters (S1 ...S4) are working without interference, optically connects one of the n transmitters (S1 ...S4) to one respectively of the n optical waveguides (F1...F4),
- and which are connected to one another over an optical waveguide in each case, **characterized by**
d) a reserve send unit (RES), comprising a reserve transmitter and a receiver, and
e) an additional transmitter (KS in Fig. 7a/7b), which is connected to one of the n optical switching units (OSE1...OSE4) in such a way that
- if all n transmitters (S1...S4) are working without interference, the additional transmitter (KS) is optically connected across all optical switching units (OSE1...OSE4) to the receiver of the reserve send unit (RES),
- and if one (S3) of the n transmitters (S1...S4) is not working without interference, the optical switching unit (OSE3) connected to this optical transmitter registers this and independently switches over the optical space switch, so that the additional transmitter (KS) is not optically connected to the reserve send unit (RES), but instead the reserve transmitter of the reserve send unit (RES) is now optically connected to the optical waveguide which in the undisturbed state was connected to the transmitter that is now not working without interference.

6. Optical transmission system or optical send unit according to one of the preceding claims, the means monitoring all signals that enter into the ports (P1A, P2A in Figure 3) on one side of the optical space switch (ORS), and all signals that leave from these ports.

7. Optical transmission system or optical send unit according to one of the preceding claims, the means including photodiodes (PD1A, PD2A, PD1B, PD2B in Figure 2), directional couplers (K1A, K2A, K1B, K2B) and a control unit (SE).

8. Optical switching network with several dialling switches, **characterized in that** the switching network has a transmission system according to one of the claims 1 to 3, and that the dialling switches are implemented by the optical switching units of the transmission system.

## Revendications

1. Système de transmission optique comprenant un dispositif de transmission, au moins un dispositif de transmission de substitution et au moins deux unités de commutation optique qui comprennent chacune un commutateur d'espace optique n x m (ORS) avec n + m bornes (P1A...PNA ; P1B...PMB), n = 1, 2, 3, 4, ... et m = 2, 3, 4, ..., auquel sont associés des moyens (K1A, L1B, M1A, M1B, SE) qui surveillent les signaux optiques appliqués sur au moins une borne (P1A, P1B) de chaque côté du commutateur d'espace optique (ORS) et qui commandent la position du commutateur d'espace optique n x m (ORS) en fonction des signaux optiques surveillés, **caractérisé en ce que** lorsque le dispositif de transmission ne fonctionne pas sans perturbation, cette situation est détectée par les au moins deux unités de commutation optique et celles-ci commutent automatiquement sur l'un des dispositifs de transmission de substitution.

2. Système de transmission optique bidirectionnel comprenant :
a) une première unité d'émission/réception,
b) une deuxième unité d'émission/réception,
c) une première fibre optique (F dans les figures 4a et 4b) qui relie la première unité d'émission/réception avec la deuxième unité d'émission/réception,
d) au moins k fibres optiques supplémentaires (EF), k = 1, 2, 3, ..., qui sont disposées parallèlement à la première fibre optique (F),
e) au moins deux unités de commutation optique (OSE1, OSE2, OSE3) qui comprennent chacune un commutateur d'espace optique n x m (ORS) avec n + m bornes (P1A...PNA ; P1B...PMB), n = 1, 2, 3, 4, ... et m = 2, 3, 4, ..., auquel sont associés des moyens (K1A, L1B, M1A, M1B, SE) qui surveillent les signaux optiques appliqués sur au moins une borne (P1A, P1B) de chaque côté du commutateur d'espace optique (ORS) et qui commandent la position du commutateur d'espace n x m (ORS) en fonction des signaux optiques surveillés, **caractérisé en ce que**
- les au moins deux unités de commutation optique (OSE1, OSE2, OSE3) sont intégrées dans les fibres optiques (F, EF),
- et les au moins deux unités de commutation optique (OSE1, OSE2, OSE3), lorsque l'une des k+1 fibres optiques (F, EF) est endommagée dans au moins l'une des sections qui se trouve entre deux unités de commutation optique, commutent automatiquement sur une autre fibre optique dans cette section.

3. Système de transmission optique unidirectionnel comprenant :
a) un premier émetteur,
b) un récepteur,
c) une première fibre optique (F dans la figure 5) qui relie le premier émetteur avec le récepteur et dans laquelle se propagent les signaux à transmettre dans une première direction de propagation,
d) au moins k fibres optiques supplémentaires (EF), k = 1, 2, 3, ..., qui sont disposées parallèlement à la première fibre optique (F),
e) un deuxième émetteur (KS), **caractérisé par**
f) un coupleur (VK) qui injecte la lumière produite par le deuxième émetteur (KS) dans la première fibre optique de telle sorte qu'elle se propage en sens inverse de la première direction de propagation,
g) au moins deux unités de commutation optique (OSE2, OSE3 dans la figure 5) qui comprennent chacune un commutateur d'espace optique n x m (ORS) avec n + m bornes (P1A...PNA ; P1B...PMB), n = 1, 2, 3, 4, ... et m = 2, 3, 4, ..., auquel sont associés des moyens (K1A, L1B, M1A, M1B, SE) qui surveillent les signaux optiques appliqués sur au moins une borne (P1A, P1B) de chaque côté du commutateur d'espace optique (ORS) et qui commandent la position du commutateur d'espace n x m (ORS) en fonction des signaux optiques surveillés,
- les au moins deux unités de commutation optique (OSE1, OSE2, OSE3) étant intégrées dans les fibres optiques,
- les au moins deux unités de commutation optique (OSE1, OSE2, OSE3), lorsque l'une des k+1 fibres optiques (F, EF) est endommagée dans au moins l'une des sections qui se trouve entre deux unités de commutation optique, commutant automatiquement sur une autre fibre optique dans cette section.

4. Unité d'émission optique comprenant :
a) un premier émetteur,
b) une unité de commutation optique avec 2 x 2 bornes, laquelle comprend un commutateur d'espace optique n x m (ORS) avec n + m bornes (P1A...PNA ; P1B...PMB), n = 1, 2, 3, 4, ... et m = 2, 3, 4, ..., auquel sont associés des moyens (K1A, L1B, M1A, M1B, SE) qui surveillent les signaux optiques appliqués sur au moins une borne (P1A, P1B) de chaque côté du commutateur d'espace optique (ORS) et qui commandent la position du commutateur d'espace n x m (ORS) en fonction des signaux optiques surveillés et qui, lorsque le premier émetteur fonctionne parfaitement, relient optiquement celui-ci avec une fibre optique, **caractérisée par**
c) une unité d'émission de réserve comprenant un émetteur de réserve et un récepteur et
d) un deuxième émetteur qui est raccordé à l'unité de commutation optique de telle sorte que, lorsque le premier émetteur fonctionne parfaitement, la deuxième émetteur soit relié avec le récepteur de l'unité d'émission de réserve et que, lorsque le premier émetteur ne fonctionne pas parfaitement, cette situation soit enregistrée par l'unité de commutation optique et le commutateur d'espace optique commute automatiquement de manière à ce que le deuxième émetteur ne soit pas relié avec l'unité d'émission de réserve, mais qu'à présent l'émetteur de réserve de l'unité d'émission de réserve soit relié optiquement avec la fibre optique.

5. Unité d'émission optique comprenant :
a) n émetteurs (S1...S4), n = 2, 3, 4, ...,
b) n fibres optiques (F1...F4),
c) n unités de commutation optique (OSE1...OSE4) avec 2 x 2 bornes, lesquelles comprennent chacune un commutateur d'espace optique n x m (ORS) avec n + m bornes (P1A...PNA ; P1B...PMB), n = 1, 2, 3, 4, ... et m = 2, 3, 4, ..., auquel sont associés des moyens (K1A, L1B, M1A, M1B, SE) qui surveillent les signaux optiques appliqués sur au moins une borne (P1A, P1B) de chaque côté du commutateur d'espace optique (ORS) et qui commandent la position du commutateur d'espace n x m (ORS) en fonction des signaux optiques surveillés et
- qui, lorsque les n émetteurs (S1...S4) fonctionnent tous parfaitement, relient chacun optiquement l'un des n émetteurs (S1... S4) avec à chaque fois l'une des n fibres optiques,
- et qui sont reliées entre elles à chaque fois par une fibre optique,
**caractérisée par**
d) une unité d'émission de réserve (RES) comprenant un émetteur de réserve et un récepteur et
e) un émetteur supplémentaire (KS dans les figures 7a/7b) qui est raccordé aux unités de commutation optique (OSE1...OSE4) de telle sorte que
- lorsque la totalité des n émetteurs (S1...S4) fonctionne parfaitement, l'émetteur supplémentaire (KS) est relié optiquement avec le récepteur de l'unité d'émission de réserve (RES) par le biais de toutes les unités de commutation optique (OSE1...OSE4),
et, lorsque l'un (S3) des n émetteurs(S1...S4) ne fonctionne pas parfaitement, cette situation est enregistrée par l'unité de commutation optique (OSE3) reliée à cet émetteur et le commutateur d'espace optique commute automatiquement de manière à ce que l'émetteur supplémentaire (KS) ne soit pas relié avec l'unité d'émission de réserve (RES), mais qu'à présent l'émetteur de réserve de l'unité d'émission de réserve (RES) soit relié optiquement avec la fibre optique qui, en situation non perturbée, était reliée avec l'émetteur qui ne fonctionne maintenant pas parfaitement.

6. Système de transmission optique ou unité d'émission optique selon l'une des revendications précédentes, les moyens surveillant tous les signaux qui pénètrent dans les bornes (P1A, P2A dans la figure 3) d'un côté du commutateur d'espace optique (ORS) et tous les signaux qui sortent de ces bornes.

7. Système de transmission optique ou unité d'émission optique selon l'une des revendications précédentes, les moyens comprenant des photodiodes (PD1A, PD2A, PD1B, PD2B dans la figure 2), des coupleurs directionnels (K1A, K2A, K1B, K2B) et une unité de commande (SE).

8. Réseau de connexion optique comprenant plusieurs sélecteurs, **caractérisé en ce que** le réseau de connexion présente un système de transmission selon l'une des revendications 1 à 3 et que les sélecteurs sont réalisés par les unités de commutation optique du système de transmission.
